# DEMANDE DE BREVET EUROPEEN

(11) **EP 1 235 431 A1**
(43) Date de publication de la demande: **28.08.2002**
(21) Numéro de dépôt: 02075672.2
(22) Date de dépôt: 19.02.2002
(51) Int. Cl.: H04N 7/16, H04N 7/173

(54) **Procédé d'abonnement à un service de télévision**

(30) Priorité: 27.02.2001 FR 0102665
(71) Demandeur: Koninklijke Philips Electronics N.V., 5621 BA Eindhoven (NL)
(72) Inventeur: Vigot, Emmanuel, c/o Société Civile S.P.I.D, 75008 Paris (FR); Gaviot, Frédéric, c/o Société Civile S.P.I.D, 75008 Paris (FR)
(74) Mandataire: de la Fouchardière, Marie-Noelle

(57) **Abrégé**

Un mode d'abonnement à un programme de télévision permet à un fournisseur de programmes 61 de proposer différents abonnements à un utilisateur, l'utilisateur pouvant souscrire un de ces abonnements. L'utilisateur possède un dispositif 69 configuré pour l'abonnement choisi, ce dispositif lui permettant de réduire ou non la durée des publicités lors de l'enregistrement d'un programme ou lors de la lecture d'un programme enregistré. Suivant l'abonnement souscrit, l'utilisateur pourra ne pas enregistrer les publicités lors de l'enregistrement d'un programme, sauter les publicités lors de la lecture d'un programme enregistré ou à l'inverse sera contraint de regarder les publicités lors de la lecture d'un programme enregistré, le dispositif configuré pour l'abonnement désactivant dans ce cas la fonction «avance rapide» du lecteur au moment des publicités.
Ce mode d'abonnement peut être utilisé par des fournisseurs de programmes, en télévision numérique ou analogique, afin d'accroître leur nombre de souscripteurs.

## Description

### DOMAINE TECHNIQUE

L'invention concerne un procédé d'abonnement à un service pour un traitement d'un programme d'entrée comprenant au moins un événement particulier.

L'invention concerne également un dispositif de lecture d'un programme d'entrée comprenant au moins un événement particulier.

L'invention concerne également un dispositif d'enregistrement d'un programme d'entrée comprenant au moins un événement particulier.
L'invention peut être appliquée, par exemple, dans l'industrie de l'audiovisuel, par un fournisseur de services.

### ETAT DE LA TECHNIQUE ANTERIEURE

Des programmes de télévision comprennent généralement des évènements particuliers, comme des plages publicitaires. Lorsqu'un utilisateur enregistre un programme, par exemple un film, il enregistre en même temps les plages publicitaires diffusées avec ce programme. Lorsque l'utilisateur lit le programme qu'il a enregistré, il peut désirer ne pas visualiser les publicités qui interrompent son programme. Ceci est possible en utilisant une fonction «avance rapide» de son magnétoscope, mais dans ce cas il est fréquent de dépasser la fin de la publicité et de manquer le programme lorsqu'il reprend. En outre, cette action nécessite un certain temps, ce qui peut être gênant pour l'utilisateur. Certains fournisseurs de services proposent des enregistreurs permettant d'enregistrer les programmes sur un disque dur et de sauter, au moment d'une lecture d'un programme, les publicités, par sauts de 30 secondes, par simple pression sur une touche, chaque pression permettant d'avancer le programme de 30 secondes. Un système «Smart Scan» permet de ne pas dépasser la fin de la publicité, et ainsi de ne pas manquer une seconde du programme que l'on souhaite visualiser. Un enregistreur commercialisé par Philips sous la référence HDR612 est un exemple de tels enregistreurs. Ces fournisseurs de services offrent d'autres fonctionnalités dans leurs enregistreurs, par exemple la possibilité d'interrompre un programme lors d'une diffusion et de reprendre le cours du programme quelques minutes plus tard, sans manquer une seconde du programme diffusé. Une obtention de tels enregistreurs s'effectue en souscrivant au fournisseur de services un abonnement, qui consiste, par exemple, à payer chaque mois une certaine somme au fournisseur de services. Mais ils ne proposent à l'utilisateur qu'un seul type d'abonnement, qui comprend l'ensemble des fonctionnalités de l'enregistreur. Ainsi, un utilisateur désirant posséder toutes les fonctionnalités de l'enregistreur, sauf la fonction permettant de sauter les publicités lors de la lecture d'un programme enregistré, car il apprécie les publicités à la télévision, doit payer le même prix qu'un utilisateur qui désire pouvoir sauter les publicités.

### EXPOSE DE L'INVENTION

Un premier but de l'invention est de proposer un procédé d'abonnement à un service permettant à un fournisseur de services de proposer différents types d'abonnements à un utilisateur.

Selon l'invention, un procédé d'abonnement tel que défini dans le paragraphe d'ouverture est caractérisé en ce qu'il comprend les étapes suivantes, mises en oeuvre par un fournisseur de services :
- une étape de proposition de différents abonnements à un utilisateur destiné à effectuer un choix d'abonnement et disposant d'un dispositif comprenant des moyens de sélection de l'événement particulier configurables à partir de l'abonnement choisi et aptes à fournir un programme de sortie comprenant ou non l'événement particulier selon l'abonnement choisi ;
- une étape de validation du choix d'abonnement de l'utilisateur qui déclenche une étape de configuration desdits moyens de sélection.

Un avantage de ce procédé d'abonnement est qu'il permet de proposer différents types d'abonnements aux utilisateurs et ainsi d'obtenir un nombre de souscripteurs élevé. En effet, les utilisateurs attirés par la possibilité de sauter des publicités lors d'un enregistrement ou d'une lecture d'un programme seront attirés par l'abonnement correspondant à cette fonctionnalité et les utilisateurs attirés par le fait de payer une somme moins élevée, sans pouvoir effectuer d'avance rapide au moment des publicités à la lecture d'un programme enregistré, seront attirés par l'abonnement correspondant.

Un deuxième but de l'invention est de proposer un dispositif de lecture destiné à être utilisé pour la mise en oeuvre de l'invention.

Selon l'invention, un dispositif de lecture tel que défini dans le paragraphe d'ouverture est caractérisé en ce qu'il comprend des moyens de sélection de l'événement particulier configurables à partir d'un abonnement choisi par un utilisateur et aptes à fournir un programme de sortie comprenant ou non l'événement particulier selon l'abonnement choisi par l'utilisateur.

Un troisième but de l'invention est de proposer un dispositif d'enregistrement destiné à être utilisé pour la mise en oeuvre de l'invention.

Selon l'invention, un dispositif d'enregistrement tel que défini dans le paragraphe d'ouverture est caractérisé en ce qu'il comprend des moyens de sélection de l'événement particulier configurables à partir d'un abonnement choisi par un utilisateur et aptes à stocker sur un support un programme de sortie comprenant ou non l'événement particulier selon l'abonnement choisi par l'utilisateur.

L'invention tire partie du fait que lors d'une transmission d'un programme, une information est transmise caractérisant un état d'un événement en cours. Par exemple, les différents états décrits ci-dessous peuvent caractériser l'événement en cours.
- Commence dans quelques secondes : cet état indique que le programme (par exemple un film) va commencer de façon imminente.
- En pause : cet état indique que le programme (par exemple le film) est momentanément interrompu (par exemple lors d'une coupure publicitaire).
- En cours : cet état indique que le programme est actuellement en cours de diffusion.
- Stop : cet état indique que le programme est terminé.

Suivant l'abonnement choisi, le dispositif de lecture configuré pour l'abonnement choisi utilise cette information afin de permettre à l'utilisateur de sauter ou non les publicités lors de la lecture d'un programme enregistré. De même, le dispositif d'enregistrement configuré pour l'abonnement choisi utilise cette information afin de permettre à l'utilisateur de sauter ou non les publicités lors de l'enregistrement d'un programme. Par exemple, le fournisseur de services peut proposer à l'utilisateur trois abonnements différents. Le premier abonnement, le plus cher, permet de sauter les publicités à l'enregistrement d'un programme ou à la lecture d'un programme enregistré. Lors de l'enregistrement, le dispositif d'enregistrement configuré pour cet abonnement utilise l'information d'état de l'événement en cours afin de ne pas enregistrer les publicités. A la lecture, l'utilisateur peut, par une simple pression sur une touche d'une télécommande commandant le dispositif de lecture, sauter les publicités. Le deuxième abonnement, moins cher que le premier, ne permet pas à l'utilisateur de ne pas enregistrer les publicités. A la lecture d'un programme enregistré, l'utilisateur peut effectuer une avance rapide afin d'éviter de regarder les publicités dans leur intégralité. Cet abonnement correspond aux fonctionnalités de magnétoscopes tels qu'ils sont connus dans l'état de l'art antérieur. Le troisième abonnement, le moins cher, ne permet pas à l'utilisateur de ne pas enregistrer les publicités et ne permet pas d'effectuer une avance rapide au moment des publicités lors de la lecture d'un programme enregistré. L'invention et des caractéristiques additionnelles qui peuvent être utilisées avec avantage pour mettre en oeuvre l'invention, seront décrites ci-dessous plus en détail par référence à des figures.

### BREVE DESCRIPTION DES FIGURES

La figure 1 illustre un exemple de système de télécommunication comportant un équipement destiné à la mise en oeuvre de l'invention ;
La figure 2 illustre un exemple d'informations transmises en même temps qu'un programme dans le cas d'une transmission vidéo numérique DVB ;
Les figures 3a et 3b illustrent un exemple de mise en oeuvre d'un dispositif d'enregistrement, dans le cas de l'enregistrement d'un programme, pour un abonnement où des sauts de publicités sont autorisés à l'enregistrement ;
Les figures 4a et 4b illustrent un exemple de mise en oeuvre d'un dispositif d'enregistrement, dans le cas de l'enregistrement d'un programme, pour un abonnement où des sauts de publicités ne sont pas autorisés à l'enregistrement ;
Les figures 5a et 5b illustrent deux exemples de mise en oeuvre de dispositifs de lecture, dans le cas de la lecture d'un programme enregistré contenant des publicités, respectivement pour un abonnement où les sauts de publicités sont autorisés à la lecture et pour un abonnement où l'avance rapide n'est pas autorisée au moment des publicités à la lecture d'un programme enregistré ;
La figure 6 illustre un exemple de procédé d'abonnement selon l'invention ;
La figure 7 illustre les étapes de choix d'abonnement par un utilisateur, de validation par un fournisseur de services du choix d'abonnement et de configuration d'un dispositif configurable pour l'abonnement choisit.

### MODE DE REALISATION DE L'INVENTION

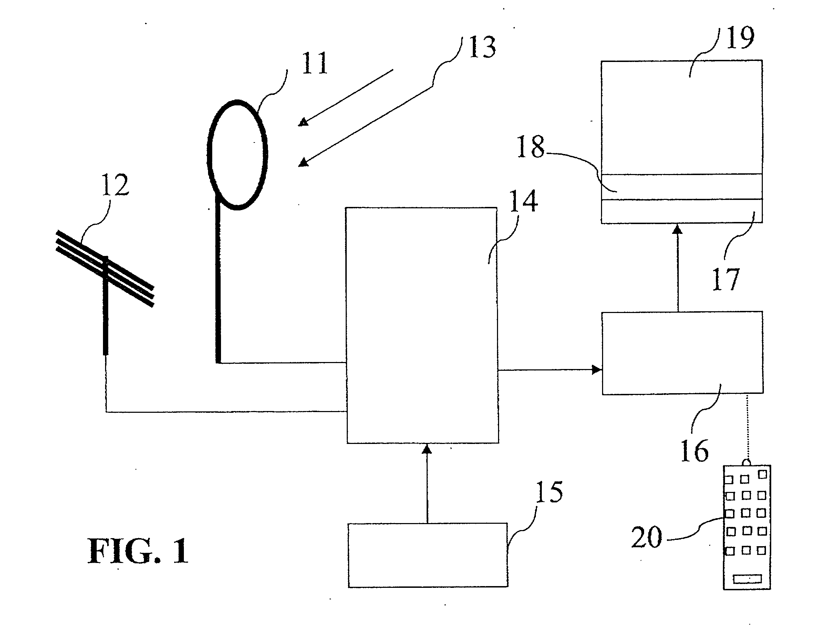

La figure 1 illustre un exemple de système de télécommunication comportant un équipement destiné à la mise en oeuvre de l'invention. Un système de télécommunication comprend une parabole 11 ou une antenne 12, un multiplexeur 14, un dispositif configuré pour l'abonnement 16, un enregistreur 17, un lecteur 18, une télévision 19 et une télécommande 20.

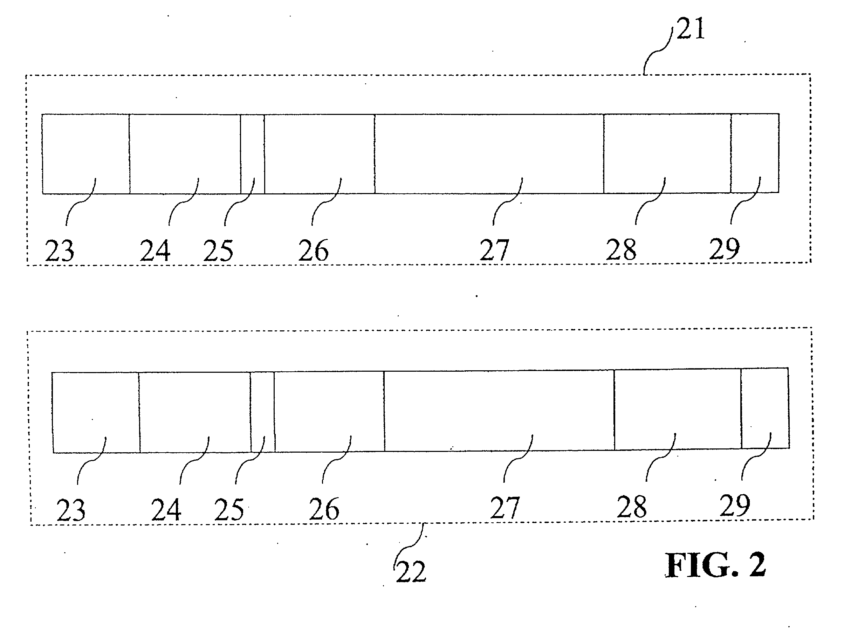

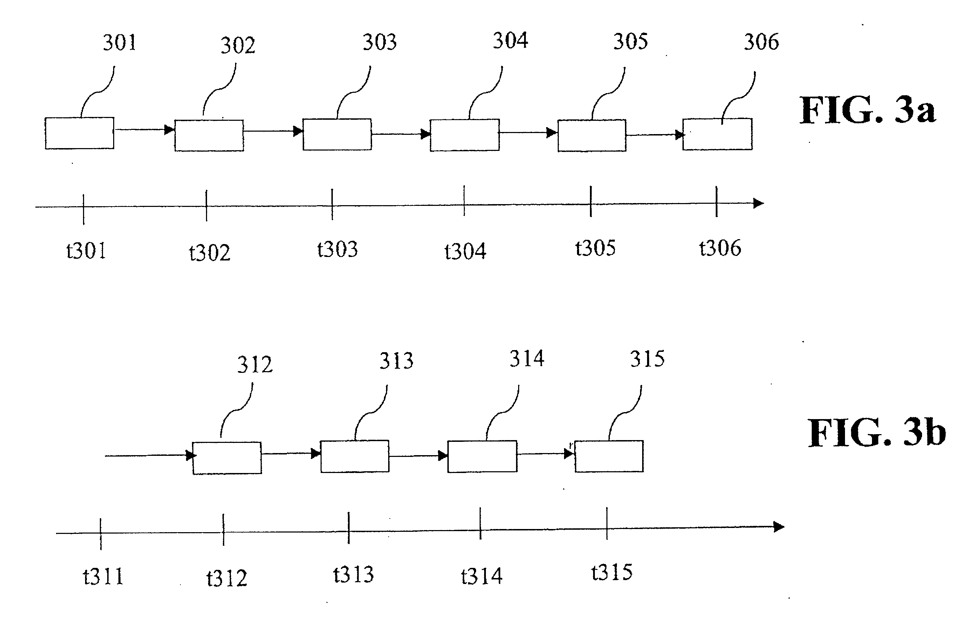

L'exemple illustré ici s'applique à la transmission de données 13 au format MPEG 2. Il faut noter que l'invention s'applique à d'autres formats de données, par exemple des données transmises sous forme analogique. Les données 13 sont diffusées par un diffuseur de programmes et transmises via un satellite vers la parabole 11 ou par voie terrestre vers l'antenne 12. A ces données 13 sont ensuite ajoutés des services 15, grâce au multiplexeur 14. Ces services 15 se présentent sous la forme de données supplémentaires, qui peuvent être par exemple une heure, un guide des programmes ou encore une information d'état d'un événement en cours. Par exemple, dans le cas d'une transmission numérique utilisant un standard de vidéo numérique DVB ou un standard de vidéo américain ATSC, les trames de données contiennent des tables EIT qui sont des tables d'informations sur les évènements et qui possèdent des informations d'état de l'événement en cours. Une structure de ces tables EIT sera précisée plus en détail sur la figure 2. Le fournisseur de services selon l'invention pourra soit utiliser les informations fournies par les tables EIT dans le cas où le standard utilisé est le standard DVB, soit ajouter des informations d'état de l'événement en cours aux données 13 grâce au multiplexeur 14, en utilisant par exemple un outil comme un éditeur de tables PSIP dans le cas du standard ATSC. Dans le cas où le fournisseur de services ajoute des informations d'état de l'évènement en cours aux données 13, ce fournisseur de services peut ajouter des informations supplémentaires par rapport aux informations contenues dans les tables EIT, par exemple une information sur un début et une fin de chaque publicité comprise dans une plage de publicités. Les données 13 complétées par les services 15 sont ensuite acheminées vers le dispositif configuré pour l'abonnement 16 et traitées par ce dispositif 16 en fonction de l'abonnement choisi par l'utilisateur. Le traitement de ces données sera précisé plus en détail par les figures 3, 4 et 5. Les données traitées sont ensuite envoyées vers l'enregistreur 17, le lecteur 18 et la télévision 19 ou directement vers la télévision 19. Il faut noter que le dispositif configuré pour l'abonnement 16 peut être constitué d'un circuit intégré dans le lecteur 18 ou l'enregistreur 17. Dans ce cas, on désignera par 'dispositif d'enregistrement' (respectivement 'dispositif de lecture') l'ensemble constitué par le dispositif configuré pour l'abonnement 16 et l'enregistreur 17 (respectivement le lecteur 18). Le dispositif configuré pour l'abonnement 16 peut également prendre la forme d'un circuit intégré dans une boîte et commandant le lecteur 18 ou l'enregistreur 17 par des moyens de communication tels qu'un câble ou une liaison infrarouge. D'autre part, le dispositif configuré pour l'abonnement peut être commandé par la télécommande 20, elle même pouvant également commander l'enregistreur 17, le lecteur 18 ou la télévision 19. Enfin, l'enregistreur 17 et le lecteur 18 peuvent être regroupés au sein d'une même entité physique. Il en est de même pour un dispositif d'enregistrement et un dispositif de lecture. L'enregistrement des données 13 par l'enregistreur 17 ou par un dispositif d'enregistrement consiste à stocker ces données 13 sur un support, par exemple une cassette vidéo, un disque dur, un disque numérique DVD ou tout autre support permettant de stocker des données vidéo.

La figure 2 illustre un exemple d'informations de service transmises en même temps qu'un programme dans le cas du standard DVB. Des informations de service comprennent au moins une table EIT présente 21, une table EIT suivante 22, chacune de ces tables EIT comprenant un champ de longueur de section 23, un champ de service 24, un champ de numéro de section 25, un champ d'événement 26, un champ d'heure de début 27, un champ de durée 28 et un champ d'état d'événement 29.

Les différentes informations de service ajoutées aux programmes dans le cas du standard DVB sont spécifiées dans une norme EN300468 V1.3.1 (1998-02). Ces informations de service peuvent prendre les formes suivantes :
- des tables de services qui renseignent par exemple sur un bouquet de services considéré, une heure et une date, des évènements présents et à venir ou l'état de l'événement en cours.
- des descripteurs qui renseignent par exemple sur un format de programme utilisé, une nature de transmission, un contenu ou une langue du programme. Les trames de données représentées sur la figure 2 correspondent à des informations de service minimales qui doivent être transmises dans le cas du standard DVB, c'est à dire la table EIT présente 21 et la table EIT suivante 22. Pour des raisons de convenance , seuls quelques champs de ces tables ont été représentés, l'ensemble des champs étant précisé dans la norme EN300468 V1.3.1 (1998-02). La table EIT présente 21 décrit un événement en cours de diffusion. La table EIT suivante 22 décrit un événement qui sera diffusé lorsque l'événement en cours de diffusion sera terminé. Le champ de longueur de section 23 est un champ de douze bits qui spécifie un nombre de mots de huit bits contenus dans la table EIT considérée. Le nombre de mots de huit bits contenus dans la table EIT considérée doit être inférieur à 4096. Le champ de service 24 est un champ de seize bits servant à distinguer une table EIT d'un autre service ajouté au programme. Le champ de numéro de section 25 est un champ de huit bits indiquant si la table EIT considérée est la table EIT présente 21, la table EIT suivante 22 ou une autre table EIT. Lorsque ce champ vaut 0, la table EIT considérée est la table EIT présente 21, lorsque ce champ vaut 1, la table EIT considérée est la table EIT suivante 22. D'autres tables EIT peuvent faire partie des informations de service, décrivant des évènements qui seront diffusés lorsque la table EIT suivante 22 sera terminée. Ces autres tables EIT ont des numéros de section supérieurs ou égaux à 3. Le champ d'événement 26 est un champ de seize bits contenant un numéro d'identification de l'événement décrit. Le champ d'heure de début 27 est un champ de 40 bits indiquant l'heure et la date de début de l'événement décrit, en temps universel. Le champ de durée 28 est un champ de 24 bits indiquant la durée de l'événement décrit, en heures, minutes et secondes. Le champ d'état d'événement 29 est un champ de 3 bits indiquant l'état du programme en cours. Lorsque ce champ vaut 1, le programme est terminé ou n'a pas commencé. Lorsque ce champ vaut 2, le programme commence quelques secondes après. Lorsque ce champ vaut 3, le programme est en pause. Lorsque ce champ vaut 4, le programme est en cours de diffusion. Les valeurs 5 à 7 sont réservées pour un usage futur et la valeur 0 correspond à un état indéfini.

Dans le cas du standard ATSC, les différentes informations de service ajoutées aux programmes sont spécifiées dans le document A/65A de l'ATSC. Une table EIT décrit un ensemble de programmes contenu dans une plage de temps d'une durée déterminée, généralement trois heures. Une table EIT contient des informations du même type que celles contenues dans les tables EIT dans le cas du standard DVB, mais ne contient pas d'information sur l'état de l'événement en cours. Par conséquent, cette information devra être ajoutée par le fournisseur de service pour la mise en oeuvre de l'invention, alors que dans le cas du standard DVB, le fournisseur de services pourra utiliser l'information déjà présente dans le champ d'état d'événement 29. Dans le cas de la télévision analogique, le fournisseur de services pourra utiliser, pour la mise en oeuvre de l'invention, les informations fournies par un système PDC de contrôle de programmes dans les pays où ce système est disponible, ou par un télétexte dans d'autres pays.

La figure 3a illustre un exemple de mise en oeuvre d'un dispositif d'enregistrement, dans le cas d'un enregistrement classique d'un programme, pour un abonnement où des sauts de publicités sont autorisés à l'enregistrement. Un enregistrement classique peut s'effectuer soit en appuyant sur une touche de l'enregistreur 17, d'un dispositif d'enregistrement ou de la télécommande 20, soit en programmant l'heure de début de l'enregistrement. Ce sont des techniques couramment utilisées dans des magnétoscopes connus dans l'art antérieur. Les exemples illustrés sur les figures 3 à 5 s'appliquent à des programmes utilisant le standard DVB.

L'enregistrement avec saut des publicités s'effectue de la façon suivante. A un premier instant t301, l'utilisateur effectue une première action 301 consistant à demander que les publicités ne soient pas enregistrées. Cette première action 301 peut s'effectuer par exemple en pressant sur une touche située sur la télécommande 20 ou sur le dispositif d'enregistrement. A un deuxième instant t302, l'utilisateur effectue une deuxième action 302 consistant à demander le début de l'enregistrement. Il faut noter que les instants t301 et t302 peuvent être confondus, par exemple si l'utilisateur utilise une touche du type «enregistrer sans les publicités». Il faut également noter que la première action 301 peut être effectuée pour plusieurs programmes à la fois, c'est-à-dire que l'utilisateur n'aura pas nécessairement besoin d'effectuer cette première action 301 avant chaque programme qu'il désire enregistrer sans les publicités. Si le champ d'état d'événement 29 de la table EIT présente 21 ne vaut pas 4 au deuxième instant t302, le dispositif d'enregistrement ne commence l'enregistrement (troisième action 303) qu'à un troisième instant t303 où ce champ d'état d'événement 29 prend la valeur 2, indiquant que le programme commence quelques secondes après. Si le champ d'état d'événement 29 de la table EIT présente 21 vaut 4 au deuxième instant t302, indiquant que le programme est en cours de diffusion, le dispositif d'enregistrement commence l'enregistrement (troisième action 303) à ce deuxième instant t302. Dans ce cas, les instants t302 et t303 sont confondus. Le programme est alors enregistré. A un quatrième instant t304, le champ d'état d'événement 29 de la table EIT présente 21 prend la valeur 3, indiquant que le programme est coupé par des publicités. Le dispositif d'enregistrement arrête alors l'enregistrement (quatrième action 304), jusqu'à ce que le champ d'état d'événement 29 de la table EIT présente 21 prenne la valeur 4 à un cinquième instant t305, indiquant que le programme est de nouveau en cours de diffusion. Le dispositif d'enregistrement recommence alors l'enregistrement (cinquième action 305) jusqu'à ce que le champ d'état d'événement 29 de la table EIT présente 21 prennent la valeur 1 à un sixième instant t306, indiquant que le programme est terminé. Le dispositif d'enregistrement arrête alors l'enregistrement (sixième action 306).

La figure 3b illustre un exemple de mise en oeuvre d'un dispositif d'enregistrement, dans le cas d'un enregistrement défini d'un programme, pour un abonnement où des sauts de publicités sont autorisés à l'enregistrement. L'enregistrement défini d'un programme peut s'effectuer à partir d'un guide électronique des programmes, qui indique un ensemble des programmes diffusés dans des heures ou des jours qui suivent une consultation de ce guide. Par exemple, l'enregistrement défini d'un programme peut être demandé par un utilisateur en sélectionnant ce programme dans le guide électronique des programmes, à l'aide, par exemple, d'une télécommande. Lors d'une telle sélection, l'utilisateur peut choisir de ne pas enregistrer les publicités.

L'enregistrement défini d'un programme avec saut des publicités s'effectue de la façon suivante. Le dispositif d'enregistrement ne commence pas l'enregistrement tant que le programme à enregistrer n'est pas dans la table EIT présente 21, c'est à dire tant que le champ de numéro de section 25 de la table EIT contenant le programme à enregistrer ne vaut pas 0. A un septième instant t311, ce champ de numéro de section 25 prend la valeur 0, indiquant que le programme à enregistrer se trouve dans la table EIT présente 21. Le dispositif d'enregistrement ne commence l'enregistrement (septième action 312) qu'à un huitième instant t312 où le champ d'état d'événement 29 de la table EIT présente 21 prend la valeur 2, indiquant que le programme commence quelques secondes après. A partir du huitième instant t312, les étapes de l'enregistrement sont les mêmes que celles décrites sur la figure 3a, un neuvième instant t313, un dixième instant t314 et un onzième instant t315 correspondant respectivement aux instants t304, t305 et t306, une huitième action 313, une neuvième action 314 et une dixième action 315 aux actions 304, 305 et 306.

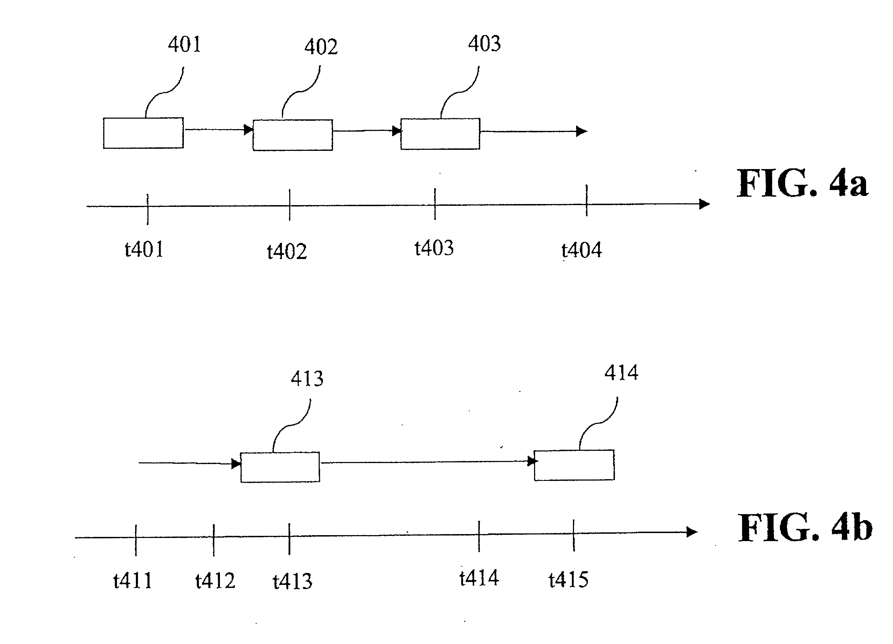

La figure 4a illustre un exemple de mise en oeuvre d'un dispositif d'enregistrement, dans le cas de l'enregistrement classique d'un programme, pour un abonnement où les sauts de publicités ne sont pas autorisés à l'enregistrement.

L'enregistrement sans saut des publicités s'effectue de la façon suivante. A un douzième instant t401, l'utilisateur demande que les publicités ne soient pas enregistrées (onzième action 401). Cette onzième action 401 peut s'effectuer par exemple à l'aide d'une touche située sur la télécommande 20 ou sur le dispositif d'enregistrement. Cette onzième action 401 est possible si des dispositifs et des télécommandes caractéristiques des abonnements possèdent des boutons de commande semblables, quelque soit l'abonnement choisi. Cependant, l'abonnement souscrit n'offrant pas la possibilité de sauter les publicités à l'enregistrement, cette demande ne sera pas prise en compte par le dispositif d'enregistrement. A un treizième instant t402, l'utilisateur demande le début de l'enregistrement (douzième action 402). Le dispositif d'enregistrement commence alors l'enregistrement. Cet enregistrement ne s'arrêtera que lorsque que l'utilisateur en fera la demande (treizième action 403) à un quatorzième instant t403, par exemple en appuyant sur une touche de la télécommande 20 ou du dispositif d'enregistrement, ou lorsqu'un support d'enregistrement sera plein à un quinzième instant t404.

La figure 4b illustre un exemple de mise en oeuvre d'un dispositif d'enregistrement, dans le cas de l'enregistrement défini d'un programme, pour un abonnement où les sauts de publicités ne sont pas autorisés à l'enregistrement.

L'enregistrement défini d'un programme sans saut des publicités s'effectue de la façon suivante. A un seizième instant t411, le programme à enregistrer ne se trouve ni dans la table EIT présente 21 ni dans la table EIT suivante 22. Le programme n'est alors pas enregistré. A un dix-septième instant t412, le programme à enregistrer se trouve dans la table EIT suivante 22. Le dispositif d'enregistrement ne commence l'enregistrement (quatorzième action 413) qu'à un dix-huitième instant t413 où le programme précédant le programme à enregistrer est terminé, c'est-à-dire lorsque le champ d'état d'événement 29 de la table EIT présente 21 prend la valeur 1. A un dix-neuvième instant t414, le programme à enregistrer est terminé (le champ d'état d'événement 29 de la table EIT présente 21 prend la valeur 1). Le dispositif d'enregistrement arrête alors l'enregistrement ( quinzième action 415) à un vingtième instant t415 correspondant à la fin du programme décrit par la table EIT présente 21.

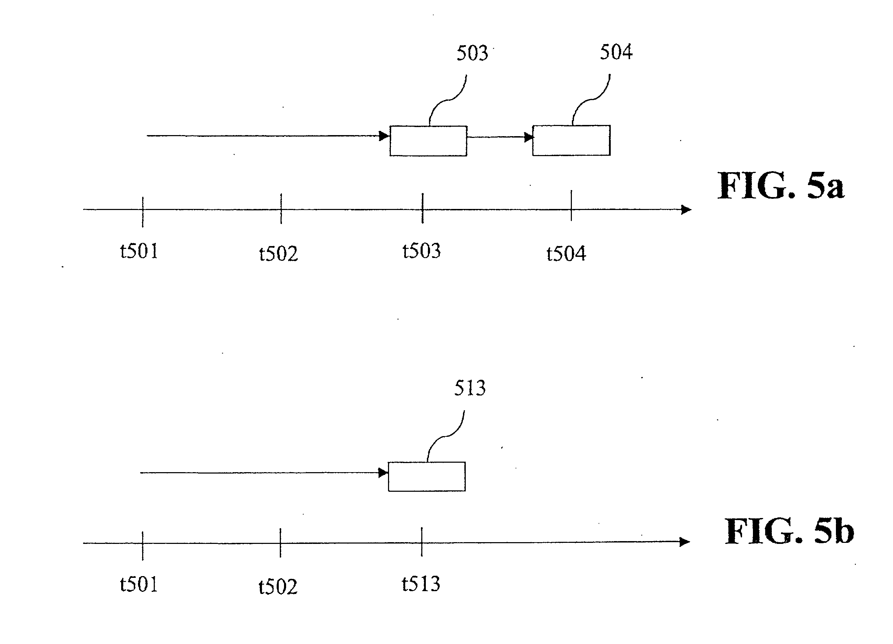

La figure 5a illustre un exemple de mise en oeuvre d'un dispositif de lecture, dans le cas de la lecture d'un programme enregistré contenant des publicités, pour un abonnement où les sauts de publicités sont autorisés à la lecture.

La lecture d'un programme enregistré avec sauts des publicités s'effectue de la façon suivante. A un vingt et unième instant t501, l'utilisateur regarde le programme, par exemple un film. A ce vingt et unième instant t501, le champ d'état d'événement 29 de la table EIT présente 21 a pour valeur 4. A un vingt-deuxième instant t502, le film est interrompu par des publicités, c'est-à-dire que le champ d'état d'événement 29 de la table EIT présente 21 prend la valeur 3. A un vingt-troisième instant t503, l'utilisateur demande de sauter les publicités (seizième action 503). Cette seizième action 503 peut s'effectuer en pressant une touche de la télécommande 20 ou du dispositif de lecture. Le dispositif de lecture recherche alors un vingt-quatrième instant t504 où le champ d'état d'événement 29 de la table EIT présente 21 prend la valeur 4, indiquant que le programme souhaité est en cours, et avance rapidement ou saute (dix-septième action 504) jusqu'à ce vingt-quatrième instant t504 pour reprendre la lecture du programme. L'écart entre les instants t503 et t504, c'est à dire un temps d'interruption du programme, est avantageusement inférieur à 5 secondes, il peut être de l'ordre de quelques dixièmes de seconde.

La figure 5b illustre un exemple de mise en oeuvre d'un dispositif de lecture, dans le cas de la lecture d'un programme enregistré contenant des publicités, pour un abonnement où l'avance rapide n'est pas autorisée à la lecture lors des publicités.

La lecture d'un programme enregistré sans autorisation d'avance rapide lors des publicités s'effectue de la façon suivante. A un vingt-cinquième instant t511, l'utilisateur regarde le programme, par exemple un film. A un vingt-sixième instant t512, le film est interrompu par des publicités. A un vingt-septième instant t513, l'utilisateur demande une avance rapide des publicités (dix-huitième action 513). Cette dix-huitième action 513 peut s'effectuer en pressant une touche de la télécommande 20 ou du dispositif de lecture. L'utilisateur ayant souscrit un abonnement n'autorisant pas l'avance rapide au moment des publicités, le dispositif de lecture désactive cette fonction «avance rapide» lors d'une publicité, c'est-à-dire lorsque le champ d'état d'événement 29 de la table EIT présente 21 a la valeur 3. L'utilisateur doit donc visualiser la totalité des publicités avant d'avoir accès à la suite du programme désiré. Une désactivation de la fonction «avance rapide» lors d'une publicité pour un abonnement sans autorisation d'avance rapide lors des publicités peut s'effectuer de la manière suivante. Lorsque le dispositif de lecture est configuré pour un abonnement n'autorisant pas l'avance rapide lors des publicités, et lorsqu'une publicité est détectée, c'est-à-dire lorsque le champ d'état d'événement 29 de la table EIT présente 21 a la valeur 3, un signal de désactivation est généré par le dispositif de lecture et envoyé soit à la télécommande 20, soit à une unité de réception de signaux envoyés par la télécommande 20, soit à une unité de lecture propre au dispositif de lecture. La réception de ce signal de désactivation peut entraîner, par exemple, l'une des trois actions ci-dessous :
- Rendre impossible l'émission d'un signal d'avance rapide à partir de la télécommande 20.
- Rendre impossible la réception d'un tel signal au niveau de l'unité de réception du dispositif de lecture.
- Interdire une vitesse de lecture correspondant à l'avance rapide au niveau de l'unité de lecture propre au dispositif de lecture.

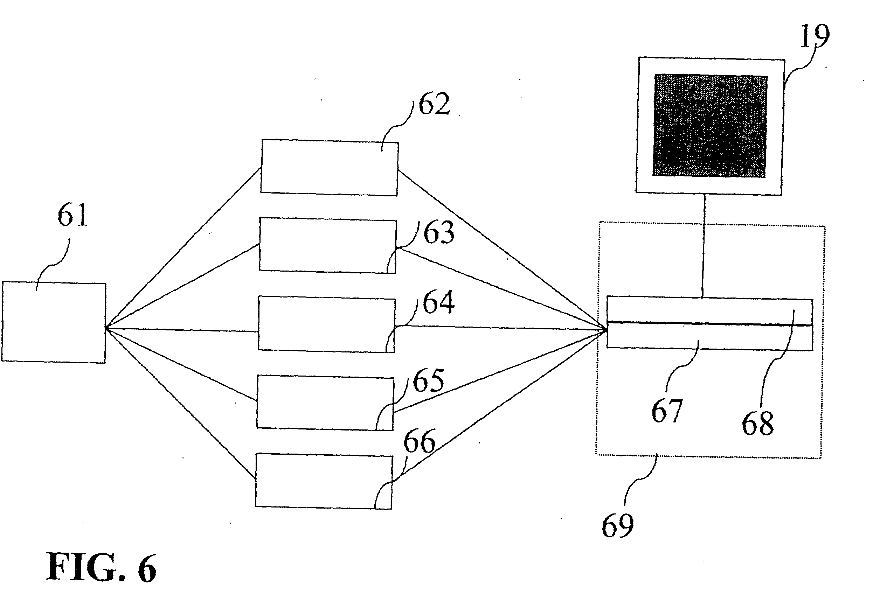

La figure 6 illustre un exemple de procédé d'abonnement selon l'invention. Un procédé d'abonnement est mis en oeuvre par un fournisseur de services 61, proposant un ensemble d'abonnements 62 à 66 à un utilisateur disposant d'un dispositif d'enregistrement 67, d'un dispositif de lecture 68 et de la télévision 19. Le dispositif d'enregistrement 67 et le dispositif de lecture 68 peuvent être regroupés dans une même entité physique, un dispositif configurable 69.

Le fournisseur de services 61 propose à un utilisateur différents abonnements 62 à 66. Ces abonnements peuvent être les suivants.
- 62 : abonnement où les sauts de publicités sont autorisés à l'enregistrement d'un programme et à la lecture d'un programme enregistré.
- 63 : abonnement où les sauts de publicités sont autorisés à l'enregistrement d'un programme mais l'avance rapide n'est pas autorisée au moment des publicités à la lecture d'un programme enregistré.
- 64 : abonnement où les sauts de publicités ne sont pas autorisés à l'enregistrement d'un programme mais sont autorisés à la lecture d'un programme enregistré.
- 65 : abonnement où les sauts de publicités ne sont pas autorisés à l'enregistrement d'un programme mais où l'avance rapide est autorisée au moment des publicités à la lecture d'un programme enregistré.
- 66 : abonnement où les sauts de publicités ne sont pas autorisés à l'enregistrement d'un programme et où l'avance rapide n'est pas autorisée au moment des publicités à la lecture d'un programme enregistré.
L'utilisateur choisit un de ces abonnements 62 à 66 et souscrit à cet abonnement en payant une somme au fournisseur de services 61, cette somme étant définie pour chaque abonnement par le fournisseur de services 61. L'utilisateur peut souscrire à un abonnement pour différentes durées. Le fournisseur de services 61 pourra ainsi proposer des abonnements de quelques heures jusqu'à des abonnements à vie. La somme pourra être payée soit en totalité à la souscription de l'abonnement, soit en plusieurs fois, par exemple chaque jour, semaine, mois ou année. Une fois l'abonnement choisit par l'utilisateur, le fournisseur de services 61 valide cet abonnement afin de configurer le dispositif configurable 69 pour l'abonnement choisit.

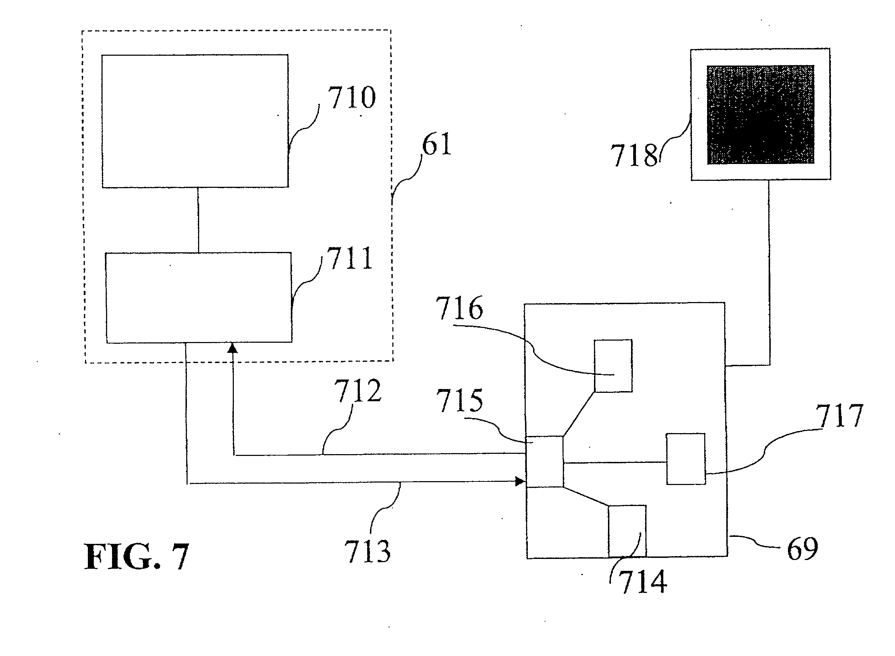

La figure 7 illustre les étapes de choix d'abonnement par l'utilisateur, de validation par le fournisseur de services 61 du choix d'abonnement et de configuration du dispositif configurable 69 pour l'abonnement choisit. Un système de communication permettant de mettre en oeuvre le procédé selon l'invention comprend une base de données de fournisseur 710, un dispositif de fournisseur 711, un dispositif configurable 69 et une interface graphique 718. Le dispositif configurable 69 comprend une unité de communication 715, une unité de paiement 714, une zone de mémoire 717 destinée à stocker des informations relatives à un abonnement choisi et une zone d'application résidente 716. Le fournisseur de services peut envoyer des signaux de validation 713 à l'utilisateur et l'utilisateur peut envoyer des signaux d'utilisateur 712 au fournisseur de services 61.

Le choix d'un abonnement par l'utilisateur peut s'effectuer de la manière suivante. Grâce à la télécommande 20, l'utilisateur invoque une application résidente stockée dans la zone d'application résidente 716. Cette application résidente permet d'afficher sur l'interface graphique 718 différents abonnements tels que ceux cités dans la description de la figure 6. L'interface graphique 718 peut être la télévision 19 ou tout autre écran permettant l'affichage de textes, par exemple un écran situé sur le dispositif configurable 69. L'utilisateur sélectionne alors l'abonnement qu'il désire, par exemple grâce à des flèches ou des numéros situés sur la télécommande 20. Un signal de choix est alors généré au niveau de la zone d'application résidente 716. Ce signal de choix peut être par exemple un mot de plusieurs bits correspondant à un numéro d'abonnement choisi. Par exemple, dans le cas où le fournisseur de services 61 propose huit abonnements différents, ce signal de choix pourra être un mot de trois bits. Il faut noter qu'il existe d'autres moyens permettant à l'utilisateur de choisir un abonnement. Par exemple, l'application permettant d'afficher sur l'interface graphique 718 les différents abonnements peut être téléchargée en permanence ou à la demande de l'utilisateur par le fournisseur de services 61, par exemple en même temps que les tables EIT. D'autre part, le dispositif configurable 69 peut être relié au dispositif de fournisseur 711 par l'intermédiaire d'un réseau de type Internet. Dans ce cas, l'utilisateur pourra accéder à un site Internet mis à sa disposition par le fournisseur de services 61 et pourra choisir un abonnement à partir de ce site. Enfin, l'utilisateur peut choisir un abonnement par courrier, téléphone ou en se rendant chez le fournisseur de services 61. Dans ce cas, le signal de choix ne sera pas généré.

L'étape de validation de l'abonnement choisi s'effectue de la manière suivante. Le signal de choix est envoyé vers le dispositif de fournisseur 711 grâce à l'unité de communication 715. Le signal de choix est compris dans les signaux d'utilisateur 712. Ces signaux d'utilisateur 712 peuvent également comprendre des informations sur des moyens de paiement dans la mesure où l'unité de paiement 714 permet à l'utilisateur de payer l'abonnement, par exemple grâce à une carte à puce. De telles informations peuvent contenir le numéro de le carte à puce ou la date de validité de cette carte à puce. Lorsque ces signaux d'utilisateur 712 parviennent au dispositif de fournisseur 711, le fournisseur de services interroge la base de données de fournisseur 710 afin de savoir s'il peut valider le choix d'abonnement de l'utilisateur. Par exemple, le fournisseur de services 61 pourra vérifier que l'utilisateur est en règle vis a vis du paiement de ses anciens abonnements, ou si l'utilisateur possède un solde suffisamment important pour lui permettre de payer l'abonnement dans le cas où le paiement de l'abonnement s'effectue par prélèvement sur un compte en banque. Pour valider le choix de l'abonnement, le fournisseur de services 61 génère le signal de validation 713 au niveau du dispositif de fournisseur 711 et envoie ce signal vers l'unité de communication 715 du dispositif configurable 69. Ce signal peut comprendre des données propriétaires décrivant des mécanismes pouvant être activés ou non par l'utilisateur en fonction de l'abonnement choisi, sous la forme d'une table d'abonnement par exemple. Cette table d'abonnement peut prendre la forme d'une trame constituée de plusieurs champs, chacun des champs correspondant à une fonctionnalité de l'abonnement choisi. Par exemple, un des champs aura la valeur 0 si l'utilisateur n'est pas autorisé à sauter les publicités lors de l'enregistrement d'un programme et la valeur 1 si l'utilisateur est autorisé à sauter les publicités lors de l'enregistrement d'un programme. Des données comprises dans la table d'abonnement peuvent être stockées dans la zone de mémoire 717, afin d'éviter au fournisseur de services 61 d'envoyer en permanence les signaux de validation 713. Ainsi, le fournisseur de services 61 ne devra envoyer les signaux de validation que lorsque l'utilisateur désirera changer d'abonnement. Les signaux d'utilisateur 712 et de validation 713 peuvent être transportés par un câble, grâce à un modem relié au dispositif de fournisseur 711 et un modem relié à l'unité de communication 715. Le protocole de transport utilisé peut être le protocole SNMP. Les signaux de validation 713 peuvent également être transportés sur le même support que les tables EIT, grâce à un protocole de type DSMCC.

L'étape de configuration du dispositif configurable 69 pour l'abonnement choisi s'effectue de la manière suivante. Dans le cas où le protocole de transport utilisé est le protocole SNMP, les signaux de validation 713 permettent de modifier le configuration du dispositif configurable 69 par le biais de la modification d'une base de données de management MIB présente dans le dispositif configurable 69. La base de données de management MIB se présente sous la forme d'un arbre constitué de noeuds. Un de ces noeuds peut correspondre à une des fonctionnalités d'un abonnement. Le protocole SNMP permettant de modifier la valeur des noeuds de la base de données de management MIB, il est possible de modifier la configuration du dispositif configurable 69 grâce à ce protocole. Quelque soit le protocole de transport utilisé, la configuration du dispositif configurable 69 consiste à activer les diverses fonctionnalités proposées par l'abonnement choisi en fonction des données stockées dans la zone de mémoire 717.

La description ci-dessus en référence aux figures illustre l'invention plutôt qu'elle ne la limite. A cet égard, quelques remarques sont faites ci-dessous.

Les figures 2 à 5 s'appuient sur l'exemple du standard DVB. L'invention s'applique également aux autres standards de transmission, tant en télévision numérique qu'analogique.

Sur les figures 3 à 5, quelques fonctionnalités de dispositifs d'enregistrement et de lecture ont été représentées. Il faut noter qu'un même dispositif peut regrouper plusieurs de ces fonctionnalités afin de caractériser un abonnement. A cet égard, la liste des abonnements citée sur la figure 6 n'est pas limitative.

Dans le cas où le fournisseur de services ajoute des informations d'état de l'événement en cours aux trames de données 13, ce fournisseur peut ajouter des informations supplémentaires par rapport aux informations contenues dans les tables EIT, par exemple une information sur le début et la fin de chaque publicité comprise dans une plage de publicités. Dans ce cas, l'événement particulier peut être une des publicités comprises dans la plage de publicités. Ainsi le fournisseur de services peut également proposer les abonnements décrits ci-dessous, cette liste n'étant pas exhaustive :
- abonnement où le saut de n publicités parmi un ensemble de m publicités est autorisé à la lecture d'un programme enregistré (m et n étant des nombres entiers, n étant inférieur à m).
- abonnement où l'avance rapide n'est pas autorisée pendant n publicités parmi un ensemble de m publicités à la lecture d'un programme enregistré.
- abonnement où l'enregistrement de n publicités parmi un ensemble de m publicités est obligatoire.

La figure 7 illustre quelques modes de réalisation de l'invention. Il est possible de réaliser l'invention en utilisant d'autres systèmes de communication. En particulier, d'autres protocoles de transport pourront être utilisés pour mettre en oeuvre l'invention. Ainsi, l'invention pourra être utilisée pour la télévision par réseau de type Internet, ou dans des téléphones portables tels des téléphones portables utilisant des nouvelles normes comme la norme UMTS.

## Revendications

1. Procédé d'abonnement à un service pour un traitement d'un programme d'entrée comprenant au moins un événement particulier, **caractérisé en ce qu'**il comprend les étapes suivantes, mises en oeuvre par un fournisseur de services :
- une étape de proposition de différents abonnements à un utilisateur destiné à effectuer un choix d'abonnement et disposant d'un dispositif comprenant des moyens de sélection de l'événement particulier configurables à partir de l'abonnement choisi et aptes à fournir un programme de sortie comprenant ou non l'événement particulier selon l'abonnement choisi ;
- une étape de validation du choix d'abonnement de l'utilisateur qui déclenche une étape de configuration desdits moyens de sélection.

2. Procédé d'abonnement à un service selon la revendication 1, **caractérisé en ce que** le programme d'entrée contient une table d'évènements, les moyens de sélection étant aptes à sélectionner un événement particulier à partir d'une valeur d'état d'événement dans la table.

3. Procédé d'abonnement à un service selon la revendication 1, **caractérisé en ce que** ledit dispositif comprend des moyens de désactivation aptes à désactiver des moyens de lecture accélérée d'un programme enregistré lors de l'événement particulier pour un abonnement déterminé.

4. Procédé d'abonnement à un service selon la revendication 1, **caractérisé en ce que** l'événement particulier contient au moins une publicité.

5. Procédé d'abonnement à un service selon la revendication 1, **caractérisé en ce que** le choix de l'abonnement s'effectue en sélectionnant un abonnement parmi plusieurs abonnements proposés sur une interface graphique reliée audit dispositif.

6. Procédé d'abonnement à un service selon la revendication 1, **caractérisé en ce que** ladite étape de validation est mise en oeuvre par le fournisseur de service en envoyant audit dispositif un signal caractéristique de l'abonnement choisi, ledit signal étant apte à configurer lesdits moyens de sélection en fonction de l'abonnement choisi.

7. Dispositif de lecture d'un programme d'entrée comprenant au moins un événement particulier, **caractérisé en ce qu'**il comprend des moyens de sélection de l'événement particulier configurables à partir d'un abonnement choisi par un utilisateur et aptes à fournir un programme de sortie comprenant ou non l'événement particulier selon l'abonnement choisi par l'utilisateur.

8. Dispositif d'enregistrement d'un programme d'entrée comprenant au moins un événement particulier, **caractérisé en ce qu'**il comprend des moyens de sélection de l'événement particulier configurables à partir d'un abonnement choisi par un utilisateur et aptes à stocker sur un support un programme de sortie comprenant ou non l'événement particulier selon l'abonnement choisi par l'utilisateur.
